Europäisches Patentamt

European Patent Office

Office européen des brevets

(11) Veröffentlichungsnummer: **0 059 979**
**A2**

(12) **EUROPÄISCHE PATENTANMELDUNG**

(21) Anmeldenummer: **82101887.6**

(22) Anmeldetag: **10.03.82**

(51) Int. Cl.³: **B 23 C 3/34**

(30) Priorität: **11.03.81 DE 3109198**

(43) Veröffentlichungstag der Anmeldung:
**15.09.82 Patentblatt 82/37**

(84) Benannte Vertragsstaaten:
**AT BE CH DE FR GB IT LI SE**

(71) Anmelder: Gebr. Heller Maschinenfabrik GmbH
Postfach 1428 Neuffener Strasse 54
D-7440 Nürtingen(DE)

(72) Erfinder: Maurer, Leo
Ifenstrasse 14
D-7440 Nürtingen-Reudern(DE)

(74) Vertreter: Jackisch, Walter, Dipl.-Ing.
Menzelstrasse 40
D-7000 Stuttgart 1(DE)

(54) Maschine zum Fräsen von Nuten in Bohrungswandungen von Werkstücken.

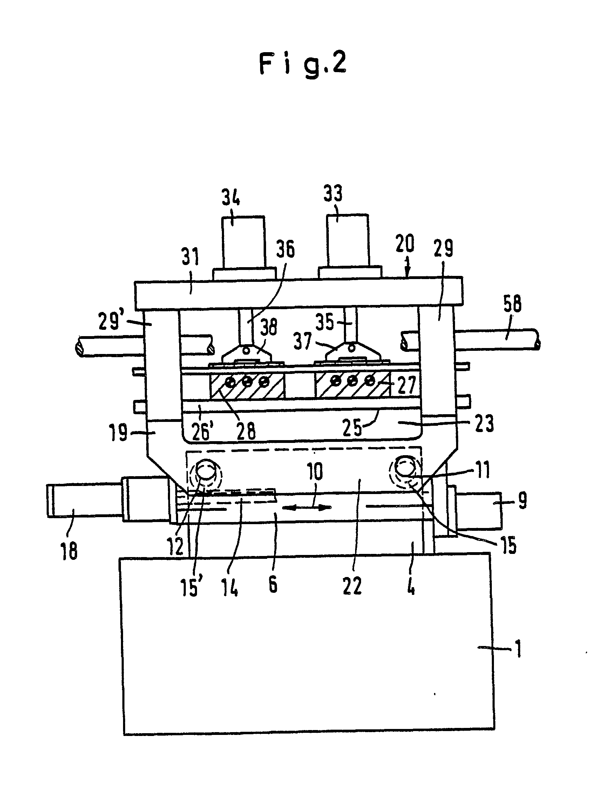

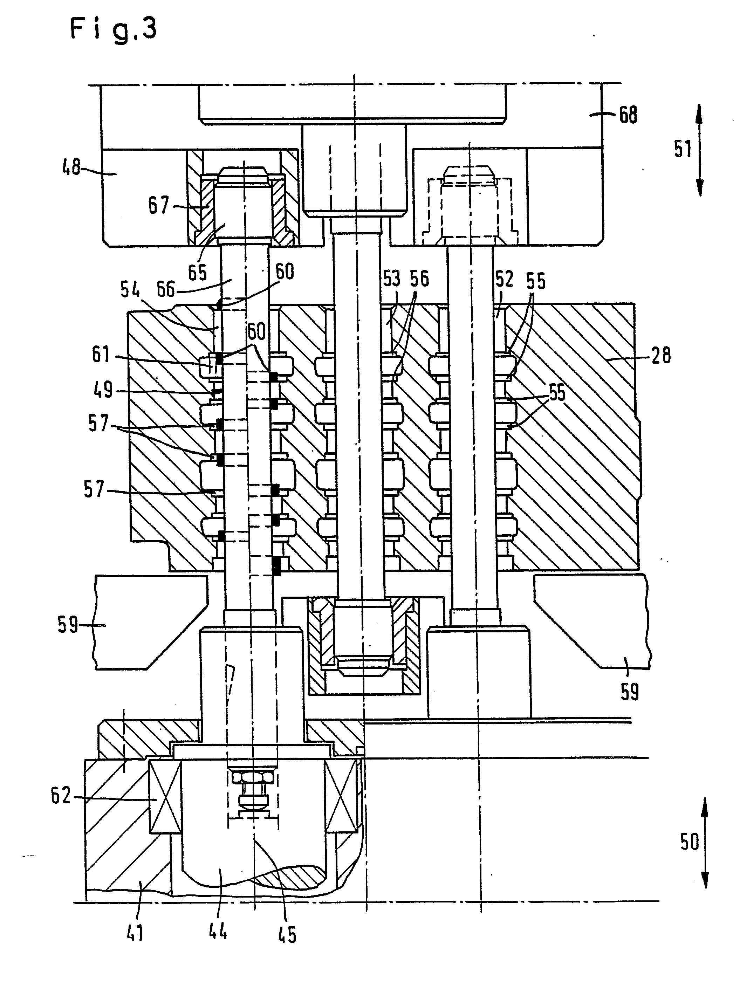

(57) Die Maschine dient zum Fräsen von Nuten (55 bis 57) in Bohrungswandungen von Werkstücken (27, 28). Das Werkstück (27, 28) ist über eine Spanneinrichtung (20) mit einem Exzenterantrieb (11, 12, 15, 15' 14, 18) zur Durchführung einer Umlaufbewegung antriebsverbunden. Die Arbeitsspindel (44) und das Fräswerkzeug (49) rotieren um ihre Achse, ohne eine Umlaufbewegung beim Fräsen auszuführen (Fig. 2 und 3).

Fig.2

**Fig.3**

Maschine zum Fräsen von Nuten in Bohrungswandungen
von Werkstücken

Die Erfindung betrifft eine Maschine zum Fräsen von Nuten in Bohrungswandungen von Werkstücken nach dem Oberbegriff des Anspruches 1.

Bei dieser bekannten Maschine (DE-AS 23 41 396) wird das zu bearbeitende Werkstück mit der Spanneinrichtung auf einem Werkzeugtisch der Maschine festgespannt. Zur Herstellung von Einstichen in der Bohrungswandung des Werkstückes wird die Arbeitsspindel mit dem Fräswerkzeug nach dem Einführen in die Bohrung zunächst radial so weit verschoben, bis mit dem Fräswerkzeug die gewünschte Tiefe des Einstiches gefräst werden kann. Anschließend wird die Arbeitsspindel mit dem Fräswerkzeug über eine Exzenterpinole um die Achse der Bohrung umlaufend angetrieben, um den umlaufenden Einstich bzw. die umlaufende Nut in der Bohrungswandung des Werkstückes herzustellen. Der zur Umlaufbewegung notwendige Exzenterantrieb für die Arbeitsspindel ist konstruktiv sehr aufwendig, weil der Drehbewegung der Spindel eine Umlaufbewegung überlagert werden muß. Ist der Fräser in einem Gegenlager abgestützt, was bei langen Bohrungen erforderlich ist, so muß auch das Gegenlager umlaufend angetrieben werden, woraus sich ein zusätzlicher konstruktiver Aufwand ergibt. Wegen des erheblichen Raumbedarfs für die Umlaufbewegungen des Werkzeuges können mehrere Arbeitsspindeln nur in verhältnismäßig großem Abstand nebeneinander auf einer Maschine angeordnet sein. Hat das Werkstück mehrere eng benachbart zueinander liegende Bohrungen, so ist wegen des raumaufwendigen Exzenterantriebes eine gleichzeitige Bearbeitung dieser Bohrungen nicht möglich, weil die Spindeln einen verhältnismäßig großen Mindestabstand voneinander haben müssen. Der maschinelle Aufwand ist in diesen Fällen beträchtlich und wirkt sich besonders ungünstig aus, wenn die Werkstücke auf Transferstraßen bearbeitet werden sollen.

Der Erfindung liegt die Aufgabe zugrunde, die Maschine nach dem Oberbegriff des Anspruches 1 so auszubilden, daß die Lagerung der Werkzeugträger und deren Antrieb vereinfacht werden.

Diese Aufgabe wird erfindungsgemäß mit dem kennzeichnenden Teil des Anspruches 1 gelöst.

Bei der erfindungsgemäßen Maschine rotieren die Arbeitsspindel und das Fräswerkzeug, ohne eine Umlaufbewegung beim Fräsen auszuführen, um ihre Achse. Die Umlaufbewegung führt das Werkstück aus, das über die Spanneinrichtung mit dem Exzenterantrieb antriebsverbunden ist. Da die Arbeitsspindel nur drehend angetrieben wird, können der Drehantrieb und die Arbeitsspindel selbst sehr kompakt und klein ausgebildet werden. Die erfindungsgemäße Maschine kann dadurch mit mehreren mit geringem Abstand nebeneinander liegenden Arbeitsspindeln ausgerüstet werden, so daß in entsprechend eng benachbart zueinander liegenden

Bohrungen eines Werkstückes gleichzeitig Nuten gefräst werden können. Mit der erfindungsgemäßen Maschine können daher innerhalb kürzester Zeit die entsprechenden Einstiche in den Bohrungen der Werkstücke gefräst werden; die Maschine kann darum vorteilhaft in Transferstraßen eingesetzt werden, in denen solche, mehrere Bohrungen aufweisenden Werkstücke in kurzer Zeit bearbeitet werden müssen. Die nicht umlaufenden Arbeitsspindeln und Fräswerkzeuge lassen sich sehr einfach und genau führen, so daß die Maschine mit hoher Genauigkeit arbeiten kann.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen:

Fig. 1          teilweise im Schnitt und teilweise in Seitenansicht eine erfindungsgemäße Maschine,

Fig. 2          in vergrößerter Darstellung eine Ansicht in Richtung des Pfeiles II in Fig. 1,

Fig. 3          teilweise im Schnitt und teilweise in Ansicht mehrere Arbeitsspindeln mit Fräswerkzeugen, die in Bohrungen eines Werkstückes eingreifen, in vergrößerter Darstellung,

Fig. 4          eine zweite Ausführungsform eines Fräs-
                werkzeuges,

Fig. 5          einen Schnitt längs der Linie V-V in
                Fig. 4.

Die Maschine hat eine Mitteneinheit 1 und zwei Seiteneinheiten 2,3, die beidseitig an die Mitteneinheit anschließen. Auf der Mitteneinheit 1 ist ein Träger 4 für zwei mit Abstand voneinander liegende Führungsbahnen 5,5' gelagert, auf denen ein Schlitten 6 verfahrbar ist. Der Schlitten hat zwei an den voneinander abgewandten Außenseiten der Führungsbahnen 5,5' anliegende Führungsleisten 7,7',an deren freien Enden in Richtung zueinander vorstehende und an der Unterseite der Führungsbahnen anliegende Querleisten, sogenannte Untergriffleisten 8,8' angeordnet sind. Da der Schlitten 6 außerdem ganzflächig auf den Führungsbahnen 5,5' abgestützt ist, wird eine sehr präzise Führung des Schlittens auf den Führungsbahnen erreicht.

Zum Verfahren des Schlittens 6 ist auf dem Mittenteil 1 eine Antriebseinrichtung 9 vorgesehen, die eine pneumatische oder hydraulische Zylinder-Kolben-Einheit sein kann. Mit ihr kann der Schlitten 6 in Richtung des Doppelpfeiles 10 in Fig. 2 verschoben werden.

Im Schlitten 6 sind im Bereich der beiden in Vorschubrichtung liegenden Enden zwei Exzenterwellen 11,12 gelagert, die mit abgekröpften Enden 13,13' beiderseits aus dem Schlitten ragen. Die beiden Exzenterwellen 11, 12 liegen senkrecht zur Vorschubrichtung 10 des Schlittens 6. Die beiden Exzenterwellen werden durch eine gemeinsame Zahnstange 14 angetrieben, die in zwei mittig auf der Exzenterwelle innerhalb des Schlittens 6 sitzende Ritzel 15,15' eingreift. Zur Aufnahme der Zahnstange 14 weist der Schlitten 6 eine in Richtung auf den Träger 4 ragende Vertiefung 16 auf, die im Bereich zwischen den beiden Führungsbahnen 5,5' liegt. Der die Vertiefung 16 begrenzende Schlittenteil liegt in einer Vertiefung 17 an der Oberseite des Trägers 4. Infolge dieser Anordnung des Zahnstangengetriebes 14,15 wird eine sehr raumsparende Ausbildung erreicht. Insbesondere befindet sich der Antrieb für die Exzenterwellen nicht im Bereich der Bearbeitungszone der Maschine oberhalb des Schlittens 6, so daß an der Bearbeitungszone selbst ausreichend Platz für die jeweiligen Bearbeitungswerkzeuge vorhanden ist. Die Zahnstange 14 wird mittels eines hydraulischen Zylinderantriebs 18 verschoben. Anstelle eines hydraulischen kann auch ein pneumatischer oder hydropneumatischer Antrieb eingesetzt werden. Der Zylinderantrieb 18 ist am Schlitten 6 befestigt. Durch Verschieben der Zahnstange 14 werden die beiden Exzenterwellen 11,12 über ihre Ritzel 15,15' gleichmäßig gedreht.

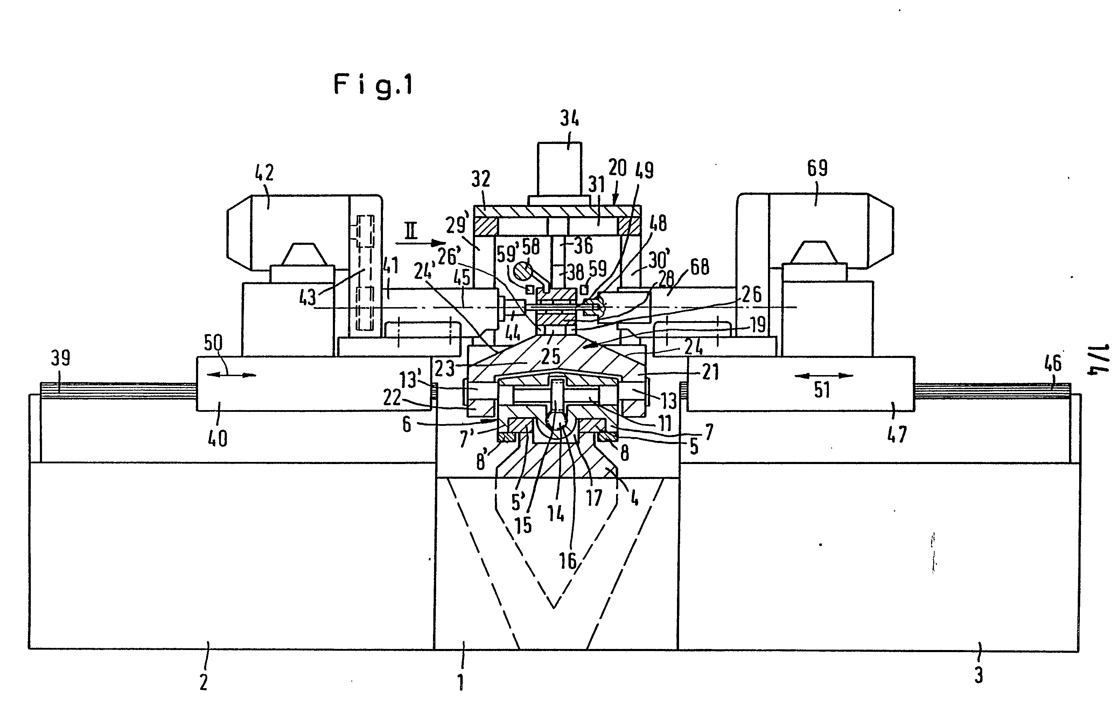

Auf den abgekröpften Exzenterwellenenden 13,13' jeder Exzenterwelle ist ein im Schnitt senkrecht zur Zahnstangenachse bügelförmiger Unterteil 19 einer Spanneinrichtung 20 gelagert (Fig. 1). Der Unterteil 19 hat zwei beiderseits des Schlittens 6 in dessen Vorschubrichtung 10 sich erstreckende Schenkel 21,22, in denen die Exzenterwellenenden 13,13' drehbar und axial gesichert gelagert sind. Die beiden Schenkel liegen mit geringem Abstand zu den Seitenwänden des Schlittens 6, so daß der Unterteil 19 über den Exzenterantrieb leicht gegenüber dem Schlitten 6 bewegt werden kann. Der die beiden Schenkel 21,22 verbindende und den Schlitten 6 an dessen Oberseite übergreifende Quersteg 23 des Unterteils 19 hat so viel Abstand vom Schlitten 6, daß der Unterteil 19 seine vom Exzenterantrieb veranlaßte Exzenterbewegung ausführen kann.

Der Quersteg 23 hat zwei unter einem stumpfen Winkel zueinander liegende, in Richtung auf den Schlitten 6 divergierende Oberseiten 24,24', um die Späneabfuhr von der Bearbeitungszone nach unten zu gewährleisten. Die Oberseiten sind durch eine horizontale Tragfläche 25 miteinander verbunden. Dadurch hat der Quersteg 23 des Unterteiles 19 im Querschnitt im wesentlichen Trapezform.

Auf der Tragfläche 25 sind zwei mit Abstand voneinander liegende und längs der Längsränder der Tragfläche sich erstreckende Auflageleisten 26,26' vorgesehen, die den Quersteg 23 des Tragteiles an beiden Enden überragen (Fig. 2) und auf denen die Werkstücke 27, 28 während des Bearbeitungsvorganges abgestützt sind.

Der Unterteil 19 der Spanneinrichtung 20 hat in Draufsicht im wesentlichen rechteckigen Umriß. Im Bereich der Ecken sind auf dem Unterteil 19 vertikale Stützen 29,29',30,30' gelagert, die durch einen auf ihren oberen Stirnseiten aufliegenden Rahmen 31 miteinander verbunden sind. Der Rahmen stützt eine Tragplatte 32 ab, auf der zwei Spannzylinder 33,34 gelagert sind, die hydraulisch, pneumatisch oder hydropneumatisch betätigt werden können. Die Kolbenstangen 35,36 der beiden Spannzylinder ragen durch die Tragplatte 32 nach unten und tragen an ihren freien Enden schwenkbar gelagerte Spannwippen 37,38,die auf den einzuspannenden Werkstücken 27,28 aufliegen. Die Bearbeitungszone liegt zwischen den Stützen 29,29',30, 30' der Spanneinrichtung 20. Die Werkstücke können auch auf Paletten gespannt sein, die dann ihrerseits in der Spanneinrichtung 20 eingespannt werden.

Die Seiteneinheit 2 trägt eine Führungsbahn 39, auf der ein Schlitten 40 senkrecht zur Vorschubrichtung 10 des Schlittens 6 verfahrbar ist. Der Schlitten trägt eine Spindeleinheit 41 sowie eine Antriebseinheit 42, mit der über einen Riementrieb 43 eine Arbeitsspindel 44 (Fig. 3) antreibbar ist. Mit dem Schlitten 40 ist die Arbeitsspindel 44 in Richtung ihrer Achse 45 senkrecht zur Vorschubrichtung 10 des Schlittens verstellbar.

Auf der Seiteneinheit 3 ist ebenfalls eine Führungsbahn 46 für einen Schlitten 47 vorgesehen, der ein Gegenlager 48 für ein Fräswerkzeug 49 trägt, das mit der Arbeitsspindel 44 verbunden ist. Die beiden Schlitten 40,47 der beiden Seiteneinheiten 2,3 sind in Richtung der Doppelpfeile 50,51 senkrecht zur Verschieberichtung 10 des Schlittens 6 verschiebbar.

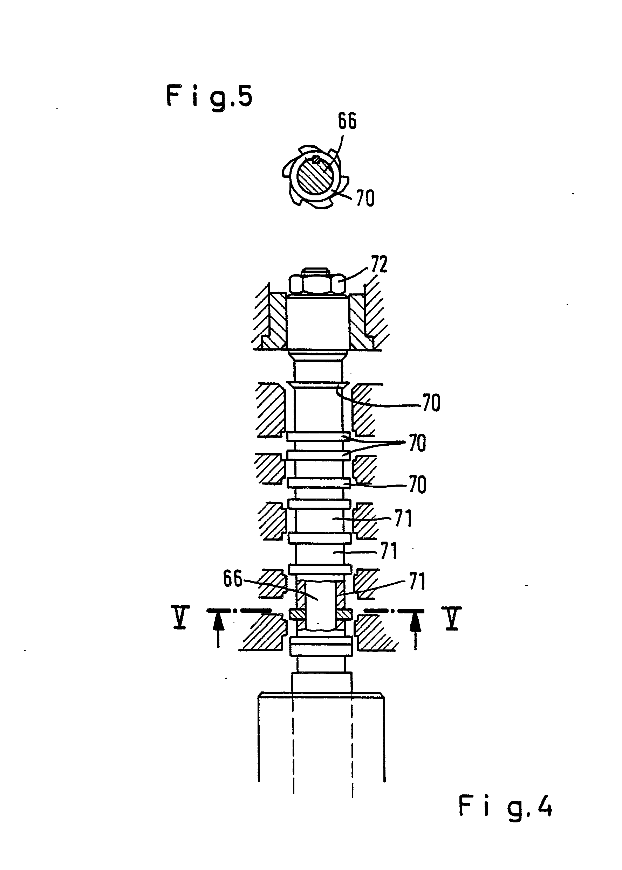

Die zu bearbeitenden Werkstücke 27,28 weisen im Ausführungsbeispiel jeweils drei Bohrungen 52 bis 54 auf (Fig. 3), in deren Wandungen jeweils Nuten 55 bis 57 gefräst werden sollen. Zu diesem Zweck werden die Werkstücke auf den Auflageleisten 26,26' aufgelegt und mittels der Spannwippen 37,38 der Spannzylinder 33, 34 eingespannt. Die Bohrungen 52 bis 54 liegen fluchtend zur Verschieberichtung der Fräswerkzeuge 49. Beim Einsetzen der Werkstücke in die Spanneinrichtung 20 sind die beiden Schlitten 40, 47 nach außen auf den Führungsbahnen 39,46 verschoben. Die Maschine kann in einer Transferstraße angeordnet sein. Die Transportbahn der Transferstraße verläuft durch die Spanneinrichtung 20, so daß die Werkstücke auf der Transportbahn mittels einer Transferstange 58 taktweise in die Spanneinrichtung 20 gebracht werden können. In Transportrichtung der Werkstücke sind diese seitlich an Transportführungsleisten 59,59' (Fig. 1) geführt. Beim Einfahren der Werkstücke in die Spanneinrichtung sind die Kolbenstangen 35,36 zurückgefahren und werden anschließend zum Einspannen der Werkstücke mittels der Spannzylinder 33,34 so weit ausgefahren, bis die Spannwippen 37,38 auf den Werkstücken aufliegen und diese fest einspannen. Anschließend werden die Schlitten 40,47 senkrecht zur Transportrichtung der Werkstücke in Richtung auf die Spanneinrichtung verfahren. Das Werkstück mit den Bohrungen ist so ausgerichtet, daß die Bohrungsachse mit der Achse der Fräswerkzeuge 49 zusammenfällt, so daß das Fräswerkzeug in die zu bearbeitende Bohrung des Werkstückes eingefahren werden kann. Wie die Fig. 1 und 3 zeigen, ragt das Fräswerkzeug 49 mit seinem freien Ende durch die Innenbohrung des Werkstückes nach außen und wird im Gegenlager 48 geführt, so daß das Fräswerkzeug an beiden Enden abgestützt ist. Um nun die Nuten in den Bohrungswandungen zu fräsen, wird der Schlitten 6 mit der Antriebseinrichtung 9 in Richtung 10 um ein der Tiefe der zu fräsenden Nut entsprechendes Maß verschoben, so daß die auf dem Fräswerkzeug angeordneten Einzelstähle 60 (Fig. 3) oder Scheibenfräser 70 (Fig. 4 und 5) die Nuten in der vorgesehenen Tiefe fräsen können. Bei der Darstellung in Fig. 3 liegt das Fräswerkzeug 49 mit seiner Achse 45 in der Achse der Bohrung. Das Werkstück 28 wird nun über den Schlitten 6 um das Maß 61 radial zur Bohrung verschoben. In dieser Lage wird der Vorschubzylinder 9 zum Verschieben des Schlittens 6 abgeschaltet und der Zylinderantrieb 18 eingeschaltet, so daß die Zahnstange 14 verschoben und über die mit ihr kämmenden Ritzel 15,15' die beiden Exzenterwellen 11,12 angetrieben werden. Der auf den abgekröpften Exzenterwellenenden 13,13' sitzende bügelförmige Unterteil 19 und damit die gesamte Spanneinrichtung 20 mit den eingespannten Werkstücken 27,28 führen hierbei eine solche Umlaufbewegung aus, daß die Bohrungsachse der Werkstücke 27,28 um die Achse 45 der Arbeitsspindel 44 umläuft, so daß die Einzelstähle 60 des Fräswerkzeuges 49 über den gesamten Umfang der Bohrung des Werkstückes die Nuten in der gewünschten Tiefe fräsen können. Nach Beendigung des Fräsvorganges wird der Exzenterantrieb ausgeschaltet und mit der Antriebseinrichtung 9 der Schlitten 6 wieder so verfahren, daß die Achse der Werkstückbohrung mit der Spindelachse 45 zusammenfällt. Dann werden die beiden Schlitten 40,47 auf den Führungsbahnen 39,46 wieder nach außen verschoben und dadurch das Fräswerkzeug 49 aus der Bohrung herausgezogen.

Das Fräswerkzeug 49 ist in der Arbeitsspindel 44 lösbar befestigt (Fig. 3), die in einem Spindellager 62 der Spindeleinheit 41 drehbar gelagert ist. Das Fräswerkzeug 49 kann, insbesondere wenn es nur eine geringe Länge hat, fliegend gelagert sein. Um aber eine präzise Führung und damit eine hohe Bearbeitungsgenauigkeit zu erhalten, ist das freie Ende 65 des Fräsdornes 66 des Fräswerkzeuges 49 im Gegenlager 48 abgestützt. Das Gegenlager hat eine Führungsbuchse 67 für das freie Fräsdornende 65. Um ein leichtes Einschieben des Fräsdornes in die Führungsbuchse zu gewährleisten, ist das freie Fräsdornende 65 an seiner Stirnseite angefast und/oder die Innenbohrung der Führungsbuchse 67 am Einführrand konisch erweitert (Fig. 3).

Da bei der Maschine das Fräswerkzeug 49 lediglich eine Drehbewegung um seine Achse, nicht jedoch eine Umlaufbewegung ausführen muß, entfallen für das Fräswerkzeug die zur Umlaufbewegung notwendigen Exzenterantriebe, so daß die Arbeitsspindel 44 nur einen geringen Raumbedarf hat. Es ist dadurch möglich, mehrere Arbeitsspindeln und damit Fräswerkzeuge in verhältnismäßig geringen Abständen nebeneinander anzuordnen, so daß auf der Maschine mehrere eng benachbart zueinander liegende Bohrungen in einem Werkstück gleichzeitig in einem Arbeitsgang bearbeitet werden können. Beim dargestellten Ausführungsbeispiel sind die Werkstücke 27,28 mit drei Bohrungen 52 bis 54 versehen. Je nach dem Abstand zwischen den Bohrungen können sämtliche Arbeitsspindeln 44 auf der einen Seite und die zugehörigen Gegenlager auf der anderen Seite des Werkstückes angeordnet sein. Werden die Abstände zwischen den Bohrungen im Vergleich zum Durchmesser der Arbeitsspindeln zu gering, dann können die Arbeitsspindeln abwechselnd auf beiden Seiten des Werkstückes gelagert sein, wie dies beispielhaft in Fig. 3 dargestellt ist. Die Spindeleinheit 41 (Fig.1) trägt somit nicht nur die Arbeitsspindeln 44, sondern auch entsprechende Gegenlager für diejenigen Fräswerkzeuge der Arbeitsspindeln, die auf einer weiteren Spindeleinheit 68 auf dem Schlitten 47 gelagert sind. Die Spindeleinheit 68 weist somit ebenfalls Arbeitsspindeln und Gegenlager auf. Zum Antrieb der Arbeitsspindel ist auf dem Schlitten 47 ebenfalls eine Antriebseinheit 69 angeordnet, die über einen (nicht dargestellten) Riementrieb die entsprechenden Arbeitsspindeln um ihre Drehachse rotierend antreibt.

Wenn die Achsabstände der Bohrungen 52,53,54 ausreichend groß sind, können sämtliche Arbeitsspindeln an der Spindeleinheit 41 oder 68 vorgesehen sein. Dann werden die Bohrungen nur von einer Seite des Werkstückes aus bearbeitet. In diesem Fall können die Gegenlager für die Arbeitsspindeln an der gegenüberliegenden Seite des Werkstückes ortsfest gelagert, beispielsweise auf der Mitteneinheit 1 befestigt sein. Dadurch ergibt sich ein besonders einfacher Aufbau der Maschine, wodurch sie sehr kostengünstig hergestellt werden kann.

Es können Ausführungsformen vorgesehen sein, bei denen auf beiden Seiten des Werkstückes Gegenlager ortsfest angeordnet sind.

Auf dem Fräsdorn 66 sind die Schneidstähle 60 wendelförmig und gleichmäßig über den Umfang verteilt angeordnet. Dadurch kann bei entsprechender Verteilung der Schneidstähle erreicht werden, daß immer nur wenige Schneidstähle gleichzeitig, ggf. nur ein einziger Schneidstahl in Eingriff mit dem Werkstück 28 ist. Der Fräsdorn 66 wird dadurch nur wenig auf Biegung beansprucht, so daß eine hohe Bearbeitungsgenauigkeit erreicht werden kann. Außerdem ist zum Antrieb der Arbeitsspindel 44 wegen des Eingriffes von wenigen, ggf. von jeweils nur einem Schneidstahl eine geringe Antriebsleistung erforderlich, so daß Motoren mit geringen Antriebsleistungen eingesetzt werden können, die billig sind und wenig Energie benötigen.

Bei dem Ausführungsbeispiel gemäß Fig. 4 und 5 trägt der Fräsdorn 66 Scheibenfräser 70, die aus Hartmetall bestehen können. Benachbarte Scheibenfräser sind durch Distanzbuchsen 71 voneinander getrennt. Zur Axialsicherung der Scheibenfräser und Distanzbuchsen ist auf das freie Ende des Fräsdorns 66 eine Mutter 72 geschraubt.

Die Maschine kann im einfachsten Falle nur mit einer Spindel 44 mit einem einzigen Fräswerkzeug 49 ausgerüstet sein, wenn die zu bearbeitenden Werkstücke nur eine einzige Bohrung haben. Sind aber in einem Werkstück in mehreren Bohrungswandungen Nuten zu fräsen, dann ist die Maschine mit einer der Zahl der Bohrungen entsprechenden Zahl von Arbeitsspindeln und Fräswerkzeugen versehen, so daß in der beschriebenen Weise in einem einzigen Arbeitsgang in sämtlichen Bohrungen die Nuten gefräst werden können. Die Maschine ist daher besonders vorteilhaft in einer Transferstraße einsetzbar, in der große Stückzahlen von Werkstücken mit jeweils mehreren Bohrungen in kürzester Zeit bearbeitet werden müssen. Da die Arbeitsspindeln und Fräswerkzeuge keine Umlaufbewegungen, sondern nur Drehbewegungen ausführen müssen, können mehrere Bohrungen gleichzeitig bearbeitet werden, wodurch die Taktzeiten beim Einsatz der Maschine in einer Transferstraße gering sind. Bei bekannten Maschinen mit nur einer einzigen Arbeitsspindel müßte das Fräswerkzeug nacheinander in die verschiedenen Bohrungen eines Werkstückes eingefahren werden, so daß mit diesen Maschinen nur eine sehr zeitaufwendige Arbeitsweise möglich ist. Es ist darum notwendig, mehrere solcher Maschinen innerhalb einer Transferstraße in verschiedenen Bearbeitungsstationen anzuordnen, um innerhalb einer vorgegebenen Zeit große Stückzahlen an Werkstücken bearbeiten zu können. Eine solche Anlage mit mehreren Maschinen ist aber teuer in der Anschaffung und kostspielig in der Wartung. Bei diesen bekannten Maschinen ist die zur Gegenführung des Fräswerkzeuges vorgesehene Abstützeinreichtung kompliziert im Aufbau und aus einer großen Zahl von Bauteilen aufgebaut, wodurch die Genauigkeit der Führung des Fräswerkzeuges und dadurch die Bearbeitungsgenauigkeit der Maschine beeinträchtigt werden. Darüber hinaus hat die Abstützeinrichtung einen großen Raumbedarf. Je größer das zu bearbeitende Werkstück ist, desto größer müssen auch die Abmessungen der ohnehin schon großen Abstützeinrichtung sein. Bei der erfindungsgemäßen Maschine ist nur ein im Aufbau einfaches, wenig Raum beanspruchendes Gegenlager für das jeweilige Fräswerkzeug vorgesehen. Es kann außerdem vorkommen, daß das Fräswerkzeug bei der Bearbeitung der ersten Bohrung eines Werkstückes beschädigt wird, so daß die nachfolgenden Bohrungen innerhalb des Werkstückes nicht mehr sauber bearbeitet werden. Dieser Fehler wird dann erst bemerkt, wenn das bearbeitete Werkstück in der Transferstraße an eine Kontrolleinrichtung in einer nächsten Station gelangt. Bei der erfindungsgemäßen Maschine kann sofort nach Beendigung des Arbeitsvorganges in der nächsten Station mittels entsprechender Kontrolleinrichtungen, die in die bearbeitete Bohrung eingeführt werden, festgestellt werden, ob die Nuten sauber bearbeitet worden sind, bzw. ob Einzelstähle 60 bzw. Scheibenfräser 70 beschädigt sind. Es ist dadurch ausgeschlossen, daß mit einem beschädigten Fräswerkzeug mehr als eine weitere Bohrung bearbeitet wird.

Bei Verwendung der Maschine innerhalb einer Transferstraße liegen die Seiteneinheiten 2,3 beiderseits der Transferstraße rechtwinklig zu dieser. Die beiden Schlitten 40,47 werden auf den Führungsbahnen 39,46 senkrecht zur Transferstraße verfahren. Die Transferstraße selbst verläuft in Verschieberichtung 10 des Schlittens 6 zwischen den Stützen 29,29',30,30' der Spanneinrichtung 20. Da lediglich die Spanneinrichtung 20 eine translatorische Bewegung ausführt, kann der notwendige Exzenterantrieb raumsparend im Bereich unterhalb des Unterteiles 19 der Spanneinrichtung 20 untergebracht werden. Die beiden Exzenterwellen 11,12 mit den zugehörigen Ritzeln 15, 15' und der Zahnstange 14 liegen geschützt innerhalb des Schlittens 6 und werden in diesem sicher geführt. Der die Vertiefung 16 aufweisende Teil des Schlittens 6 zur Aufnahme der Zahnstange 14 liegt raumsparend in der Vertiefung 17 zwischen den beiden Führungsbahnen 5,5' des Trägers 4. Die Spanneinrichtung 20 erhält infolge dieser Anordnung und Ausbildung des Exzenterantriebes eine sehr gedrängte Ausbildung, die geringen Aufstellplatz benötigt. Die beiden Exzenterwellen 11,12 können auch so ausgebildet sein, daß das Maß der Exzentrizität eingestellt werden kann. Dann können im Innendurchmesser unterschiedlich große Bohrungen eines Werkstückes auf derselben Maschine bearbeitet werden.

Zum Antrieb der Exzenterwellen 11,12 kann anstelle des beschriebenen Zahnstangengetriebes beispielsweise auch ein Schneckengetriebe vorgesehen sein.

Gebr. Heller Maschinenfabrik
Gesellschaft mit beschränkter
Haftung
Neuffener Str. 54
7440 Nürtingen


Ansprüche

1. Maschine zum Fräsen von Nuten in Bohrungswandungen von Werkstücken, mit einer Spanneinrichtung für das Werkstück, mit wenigstens einer Arbeitsspindel, die mindestens ein Fräswerkzeug aufweist und durch eine Verstelleinrichtung in Längsrichtung der Werkstückbohrung verstellbar ist, und mit einem Exzenterantrieb zur Erzeugung einer Umlaufbewegung für das Fräsen der Nuten, dadurch gekennzeichnet, daß das Werkstück (27,28) über die Spanneinrichtung (20) mit dem Exzenterantrieb (11,12,15,15',14,18) zur Durchführung der Umlaufbewegung antriebsverbunden ist.

2. Maschine nach Anspruch 1, dadurch gekennzeichnet, daß die Spanneinrichtung (20) auf mindestens zwei Exzenterwellen (11,12) des Exzenterantriebes gelagert ist.

3. Maschine nach Anspruch 1 oder 2, dadurch gekennzeichnet, daß der Exzenterantrieb (18,14,15,15',11,12) quer zur Achsrichtung (45) der Arbeitsspindel (44) verfahrbar ist.

4. Maschine nach Anspruch 3, dadurch gekennzeichnet, daß der Exzenterantrieb (18,14,15,15',11,12) an einem Schlitten (6) gelagert ist, der längs einer auf einem Maschinengestell (1,4) vorgesehenen Führung (5,5') verschiebbar ist.

5. Maschine nach einem der Ansprüche 2 bis 4, dadurch gekennzeichnet, daß die beiden Exzenterwellen (11, 12) mit beiden Enden (13,13') über den Schlitten (6) ragen und daß auf den überstehenden Wellenenden die Spanneinrichtung (20) gelagert ist.

6. Maschine nach einem der Ansprüche 1 bis 5, dadurch gekennzeichnet, daß die Spanneinrichtung (20) ein Rahmengestell (31) mit Stützen (29,29',30,30') aufweist, die einen Träger (32) für mindestens einen Spannzylinder (33,34) abstützen.

7. Maschine nach einem der Ansprüche 4 bis 6, dadurch gekennzeichnet, daß die Spanneinrichtung (20) einen bügelförmigen Unterteil (19) zur Abstützung des Rahmengestelles (31,29,29',30,30') aufweist, und daß die Schenkel (21,22) des Unterteiles (19) den Schlitten (6) seitlich übergreifen und auf den überstehenden Exzenterwellenenden (13,13') gelagert sind.

8. Maschine nach einem der Ansprüche 4 bis 7, dadurch gekennzeichnet, daß die Exzenterwellen (11,12) mit einem im Schlitten (6) liegenden Zahnstangentrieb (14,15,15') antreibbar sind.

9. Maschine nach einem der Ansprüche 4 bis 8, dadurch gekennzeichnet, daß auf jeder Exzenterwelle (11,12) ein Ritzel (15,15') sitzt, das in eine Zahnstange (14) eingreift, die in Verschieberichtung (10) des Schlittens (6) verläuft und von einer Antriebseinheit (18) antreibbar ist.

10. Maschine nach Anspruch 8 oder 9, dadurch gekennzeichnet, daß die Zahnstange (14) in einer Vertiefung (16) des Schlittens (6) im Bereich zwischen den beiden Führungsbahnen (5,5') für den Schlitten liegt.

11. Maschine nach einem der Ansprüche 1 bis 10, bei der für das Fräswerkzeug ein Gegenlager vorgesehen ist, dadurch gekennzeichnet, daß das Gegenlager (48) in Verschieberichtung (50) der Arbeitsspindel (44) verstellbar ist.

12. Maschine nach Anspruch 11, dadurch gekennzeichnet, daß das Gegenlager (48) auf einem verfahrbaren Schlitten (47) gelagert ist.

13. Maschine nach Anspruch 11 oder 12, dadurch gekennzeichnet, daß die Arbeitsspindel (44) und das Gegenlager (48) beiderseits des Werkstückes (27,28) und quer zur Transportrichtung des Werkstückes verstellbar angeordnet sind.

14. Maschine nach einem der Ansprüche 1 bis 10, bei der für das Fräswerkzeug ein Gegenlager vorgesehen ist, dadurch gekennzeichnet, daß das Gegenlager ortsfest angeordnet ist.

15. Maschine nach einem der Ansprüche 1 bis 14, dadurch gekennzeichnet, daß sie zwei einander gegenüberliegende Spindeleinheiten (41,68) aufweist, die jeweils mindestens eine Arbeitsspindel (44) und/oder mindestens ein Gegenlager (48) aufweisen.

16. Maschine nach einem der Ansprüche 1 bis 15, dadurch gekennzeichnet, daß das Fräswerkzeug (49) wendelförmig angeordnete, vorzugsweise in gleichen Abständen längs des Umfanges angeordnete Einzelstähle (60) aufweist.

Fig.1

Fig.2

Fig.3

Fig.5

66

70

72

70

70

70

71

71

66

71

V   V

Fig.4